# EUROPEAN PATENT SPECIFICATION

(11) **EP 2 149 724 B1**
(45) Date of publication and mention of the grant of the patent: **15.05.2013**
(21) Application number: 08764618.8
(22) Date of filing: 23.05.2008
(51) Int. Cl.: F16H 1/32, F16H 57/12

(54) **REDUCTION GEAR DEVICE**
UNTERSETZUNGSGETRIEBEVORRICHTUNG
DISPOSITIF D'ENGRENAGE DE RÉDUCTION

(30) Priority: 23.05.2007 JP 2007136390; 23.05.2007 JP 2007136391
(43) Date of publication of application: 03.02.2010
(73) Proprietor: Nabtesco Corporation, Tokyo 105-0022 (JP)
(72) Inventor: KOBAYASHI, Harumi, Nagoya-shi, 450-0002 (JP)
(74) Representative: Grünecker, Kinkeldey, Stockmair & Schwanhäusser
(86) International application number: PCT/JP2008/059572
(87) International publication number: WO 2008/146748

(56) References cited:
- EP-A1- 0 603 453
- EP-A1- 1 662 138
- WO-A1-97/42431
- WO-A1-98/36189
- WO-A1-2007/023783
- JP-B2- 06 021 608
- JP-U- 06 010 644
- JP-Y2- 2 563 266
- US-A1- 2007 295 136

## Description

The present invention relates to a reduction gear system including a plurality of reduction gears.

### BACKGROUND ART

As a related-art reduction gear system, there is, for example, a reduction gear system described in the generic JP 3414880 and WO 98/36189.

This reduction gear system is a reduction gear system including a first reduction gear having a first internal gear, a first external gear which meshes with the first internal gear, a first crank element which engages with the first external gear so as to cause the first external gear to perform an eccentric motion and a first support element for supporting the first crank element rotatably and a second reduction gear having a second internal gear, a second external gear which meshes with the second internal gear, a second crank element which engages with the second external gear so as to cause the second external gear to perform an eccentric motion and a second support element for supporting the second crank element rotatably, wherein the first support element and the second support element are fixed to each other.
In addition, in a frame and an interior of a motor base, by fastening a Shepin ring which is a frictional fastening member which is interposed between both input shafts of the first reduction gear and the second reduction gear in a position where an arbitrary initial input torque is added to both the input shafts by rotating the input shaft of the first reduction gear relative to the input shaft of the second reduction gear with a fastening plate, both the input shafts are fixed so as not to rotate relative to each other.

### DISCLOSURE OF THE INVENTION

### PROBLEM THAT THE INVENTION IS TO SOLVE

In this selated-art reduction gear system, in the frame and the interior of the motor base, by selecting the interference of the fastening plate or the Shepin ring appropriately, the backlash of a drive unit is made to be reduced easily. Consequently, in order to reduce the backlash, the fastering plate and the Shepin ring are necessary, and this has served to make the construction of the reduction gear system complex, worsen the working properties of the same system and increase the production costs thereof.

### MEANS FOR SOLVING THE PROBLEM

In view of the problem, the invention provides a reduction gear system which is made to reduce backlash between meshing gears, that is, internal gears and external gears of a first reduction gear and a second reduction gear by work to preload the internal gears and the external gears of the first reduction gear and the second reduction gear in a simple fashion from outer circumferences of the first reduction gear and the second reduction gear.

A means for solving the problem features the elements of independant claim 1. According to one embodiment of the invention, there is provided a reduction gear system comprising the features of claim 1.
In addition, there is provided a reduction gear system wherein a pair of bearings are disposed between the second internal gear and the second support element to straddle the second external gear.
Additionally, there is provided a reduction gear system including a spur gear which is connected to the second crank element and an input gear which meshes with the spur gear.
In addition, according to another embodiment of the reduction gear system, the reduction gear system including a spur gear which is connected to the second crank element and an input gear which meshes with the spur gear, wherein the first crank element and the second crank element are connected to each other, wherein the first support element and the second support element are fixed to each other, and wherein the first internal gear and the second internal gear are fixed to each other

Further according to another embodiment of the invention, there is provided a reduction gear system having:
a first spur gear which is connected to the first crank element; a second spur gear which is connected to the second crank element; and an input gear which meshes with the first spur gear and the second spur gear, wherein the first support element and the second support element are fixed to each other, and wherein the first internal gear and the second internal gear are fixed to each other.
   In addition, there is provided a reduction gear system, wherein a pair of bearings are disposed between the second internal gear and the second support element to straddle the second external gear.
Additionally, there is provided a reduction gear system, wherein the first internal gear and the second internal gear are fixed under a state that the first internal gear and the second internal gear are rotated in opposite directions relative to each other.
In addition, there is provided a reduction gear system, wherein the first support element and the second support element are fixed under a state that the first support element and the second support element are rotated in opposite directions relative to each other.

### ADVANTAGE OF THE INVENTION

According to the invention, backlash between the internal gears and the external gears of the first reduction gear and the second reduction gear can be reduced by work to simply preload the internal gears and the external gears of the first reduction gear and the second reduction gear from outer circumferences of the first reduction gear and the second reduction gear. Consequently, the reduction gear system in which backlash is reduced can be provided simply and inexpensively by the simple work.
In addition, according to the invention, since the pair of bearings are disposed only between the second internal gear and the second support element to straddle the second external gear but no bearing is disposed between the first internal gear and the first support element, the reduction gear system can be provided which is inexpensive.

According to the invention, since the first reduction gear and the second reduction gear are used to be disposed side by side in the axial direction, the first support element and the second support element are fixed to each other, the first internal gear and the second internal gear are fixed to each other, and the input gear is caused to mesh with the first spur gear connected to the first crank element and the second spur gear connected to the second crank element simultaneously, an input shaft can be made common. Consequently, the number of parts can be reduced, thereby making it possible to provide the reduction gear system which is inexpensive.
Additionally, according to the invention, since the pair of bearings are disposed only between the second internal toothed element and the second support element to straddle the second external gear but no bearing is disposed between the first internal toothed element and the first support element, the reduction gear system can be provided which is inexpensive.
Additionally, according to the invention, backlash between the internal gears and the external gears of the first reduction gear and the second reduction gear can be reduced by work to simply preload the respective meshing gears from outer circumferences of the first reduction gear and the second reduction gear. Consequently, the reduction gear system in which backlash is reduced can be provided simply and inexpensively by the simple work.

### BRIEF DESCRIPTION OF THE DRAWINGS

[Fig. 1] An overall view of a reduction gear system of Embodiment 1 according to the invention with a motor attached thereto.
[Fig. 2] An overall view of a reduction gear system of Embodiment 2 according to the invention with a motor attached thereto.
[Fig. 3] An overall view of a reduction gear system of Embodiment 3 according to the invention.
[Fig. 4] An overall view of a reduction gear system of Embodiment 4 according to the invention.

### (Embodiment 1)

Hereinafter, Embodiment 1 of the invention will be described based on the drawing.

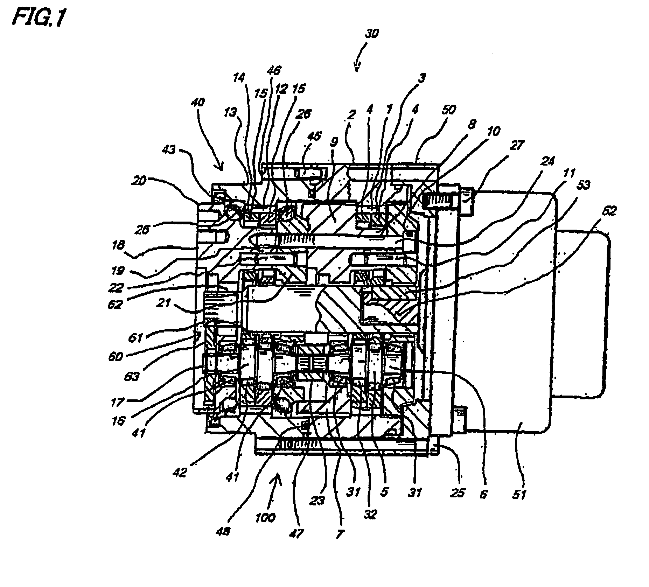

In Fig. 1, a reduction gear system 100 is made up of a first reduction gear 30 and a second reduction gear 40, The first reduction gear 30 includes a first internal toothed element 2 having a plurality of pins 1 on an inner circumference thereof as internal teeth, a pair of first external gears 4 having pluralities of external teeth 3 which mesh with the internal teeth 1, a plurality of crank elements 6 which engage with the first external gears 4 so as to cause the first external gears 4 to perform eccentric motions, and a first support element 7 which supports the first crank elements 6 rotatably. The plurality of pins 1, which function as the internal teeth, and the first internal toothed element 2 are configured into a first internal gear. The first support element 7 is made up of a support main body 9 on which a pillar portion 8 is formed to penetrate through the first external gears 4 and a disc element 10, and the support main body 9 and the disc element 10 are positioned relative to each other with a pin 11. The number of internal teeth 1 is larger by one or two than the number of external teeth 3.

The second reduction gear 40 includes a second internal toothed element 13 having a plurality of pins 12 on an inner circumference thereof as internal teeth, a pair of second external gears 15 having pluralities of external teeth 14 which mesh with the internal gears 12, a plurality of second crank elements 17 which engage with the second external gears 15 so as to cause the second external gears 15 to perform eccentric motions, and a second support element 18 which supports the second crank elements 17 rotatably. The plurality of pins 12, which function as the internal teeth, and the second internal toothed element 13 are configured into a second internal gear. The second support element 18 is made up of a support main body 20 on which a pillar portion 19 is formed to penetrate through the second external gears 15 and a disc element 21, and the support main body 20 and the disc element 21 are positioned relative to each other with a pin 22. The number of internal teeth 12 is made larger by one or two than the number of external teeth 14.

In addition, the speed reducing ratios of the first reduction gear 30 and the second reduction gear 40 are set identical with each other.

The first crank elements 6 and the second crank elements 17 are spline connected to each other via a coupling 23 so as to rotate together, and the first support element 7 and the second support element 18 are fixed to each other with a bolt 24, and the first internal toothed element 2 and the second internal toothed element 13 are connected to each other with bolts 25 under a state that the first internal toothed element 2 and the second internal toothed element 13 are rotated in opposite directions relative to each other so as to push on each other (under a state that the first internal toothed element 2 and the second internal toothed element 13 can each be moved by looseness therein and the internal tooth pins 1 of the first internal toothed element 2 and the external teeth 3 of the first external gears 4 and the internal tooth pins 12 of the second internal toothed element 13 and the external teeth 14 of the second external gears 15 are preloaded). In addition, a positioning taper pin 45 is inserted into a lower hole 46 provided in the first internal toothed element 2 and the second internal toothed element 13 so that the preloaded state cannot be released in an ensured fashion. The lower hole 46 may be machined beforehand or may be machined under a state that the first internal toothed element 2 and the second internal toothed element 13 are rotated in the opposite directions relative to each other so as to push on each other. In the case of the lower hole being machined beforehand, in the event that a taper hole having a slightly larger diameter than the lower hole 46 is machined further on the lower hole 46 when the first internal toothed element 2 and the second internal toothed element 13 are rotated in the opposite directions relative to each other so as to push on each other, the taper pin 45 can be inserted thereinto in a tightly fitting fashion.

In the event that the first internal toothed element 2 and the second internal toothed element 13 are fixed to each other strongly and rigidly with the bolts 25 so that the preloaded state cannot be released, the positioning taper pin 45 does not necessarily have to be used. In addition, in place of using the positioning taper pin 45, bolts or machine screws may be screwed into towards outer circumferential connecting surfaces of the first internal toothed element 2 and the second internal toothed element 13 from outer circumferences of the first internal toothed element 2 and the second internal toothed element 13.

The first internal toothed element 2 and the second internal toothed element 13 are positioned to each other in a radiating direction (a radial direction) by a socket and smooth fitting at a stepped portion 47. Abutment surfaces of the first internal toothed element 2 and the second internal toothed element 13 are sealed by an O ring 48.

A pair of bearings 26 are disposed between the second internal toothed element 13 and the second support element 18 to straddle the second external gears 15. A motor flange 50 is fixed to the first internal toothed element 2 with the bolts 25. A motor 51 is fixed to the motor flange 50 with bolts 27. Consequently, the motor 51 is fixed to the first internal toothed element 2 via the motor flange 50. The rotation of the motor 51 is transmitted to the second crank elements 17 from an input shaft 52 of the motor 51 via a spur gear mechanism 60, and the second support element 18 of the second reduction gear 40 constitutes a rotational output. The spur gear mechanism 60 is made up of an input shaft 62 which has a spur gear portion 61 having a small diameter and which is fixed to the motor shaft 5 with a key 53 and a spur gear 63 having a large diameter which meshes with the small-diameter spur gear portion and which is connected to the second crank elements 17 and constitutes a front-stage speed reducing mechanism.

A pair of bearings 31 are disposed between the first crank elements 6 and the first support element 7. A bearing 32 is disposed between respective crank portions 5 and the respective first external gears 4. A pair of bearings 41 are disposed between the second crank elements 17 and the second support element 18. A bearing 42 is disposed between respective crank portions 16 and the respective second external gears 14. An oil seal 43 is disposed between the inner circumference of the second internal toothed element 13 and the support main body 20. In Embodiment 1, although the first crank elements 6 and the second crank elements 17 are spline connected to each other via the coupling 23, the first crank elements 6 and the second crank elements 17 may be connected together with a key or any other means.

Next, the function of Embodiment 1 will be described. Since the speed reducing function by the first reduction gear 30 and the second reduction gear 40 is known, the speed reducing function will be described briefly.

When the first internal toothed element 2 and the second internal toothed element 13 are fixed, the rotation of the motor shaft 52 is transmitted to the second crank elements 17 and the first crank elements 6 via the spur gear mechanism 60, and rotation with a reduced speed is taken out from the second support element 18 and the first support element 7 which are fixed to each other.

Here, in the event that the internal teeth 1 of the first internal toothed element 2 and the external teeth 3 of the first external gears 4 and the internal teeth 12 of the second internal toothed element 13 and the external teeth 14 of the second external gears 15 are not preloaded, backlash at those meshing teeth portions is on the order of 0.5 arcminute at best. In Embodiment 1, however, since the first internal toothed element and the second internal toothed element are fixed together under a state that the first internal toothed element and the second internal toothed element are rotated in the opposite directions relative to each other, so that the internal teeth and the external teeth are preloaded, the backlash can be suppressed to on the order of 0.3 arcminute or smaller.

### (Embodiment 2)

Hereinafter, Embodiment 2 of the invention will be described based on the drawing. Like reference numerals will be given to like constituent elements to those of Embodiment 1, and the description thereof will be made briefly.

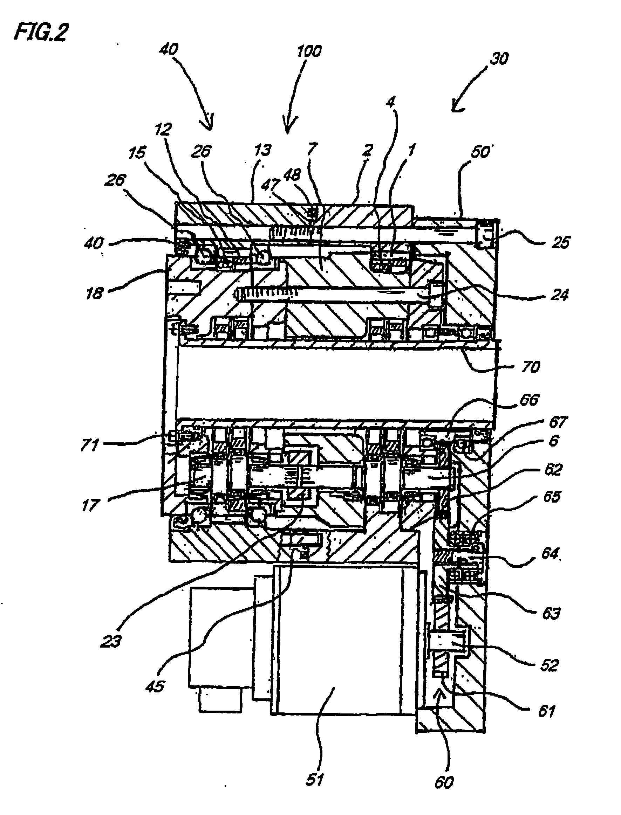

In Fig. 2, a reduction gear system 100 is made up of a first reduction gear 30 and a second reduction gear 40. The first reduction gear 30 includes a first internal toothed element 2 having a plurality of pins 1 as internal teeth on an inner circumference thereof, a pair of first external gears 4, a plurality of first crank elements 6 and a first support element 7. The plurality of pins 1 functioning as internal teeth and the first internal toothed element 2 constitute a first internal gear.

The second reduction gear 40 includes a second internal toothed element 13 having a plurality of pins 12 as internal teeth on an inner circumference thereof, a pair of second external gears 15, a plurality of second crank elements 17 and a second support element 18. The plurality of pins 12 functioning as internal teeth and the first internal toothed element 13 constitute a second internal gear.

The first crank elements 6 and the second crank elements 17 are spline connected together via a coupling 23 to rotate together, the first support element 7 and the second support element 18 are fixed to each other with bolts 24, and the first internal toothed element 2 and the second internal toothed element 13 are fixed to each other with bolts 25 under a state that the first internal toothed element 2 and the second internal toothed element 13 are rotated in opposite directions relative to each other.

A pair of bearings 26 are disposed between the second internal toothed element 13 and the second support element 18 to straddle the second external gears 15. A motor flange 50 is fixed to the first internal toothed element 2 with the bolts 25. A motor 51 is fixed to the motor flange 50 with bolts (not shown). Consequently, the motor 51 is fixed to the first internal toothed element 2 via the motor flange 50.

The rotation of the motor 51 is transmitted to the first crank elements 6 from an output shaft 52 of the motor via a spur gear mechanism 60, and the second support element 18 of the second reduction gear 40 constitutes a rotational output.

A shaft portion 64 of an intermediate spur gear 63 is supported rotatably on the motor flange 50 by a bearing 65. The spur gear mechanism 60 is made up of a spur gear 61 having a small diameter and fixed to the motor shaft 52, the intermediate spur gear 63 which meshes with the small-diameter spur gear 61, and a spur gear 62 having a large diameter which meshes with the intermediate spur gear 63 and which is connected to the first crank elements 6. A center spur gear 66 is supported rotatably on the first support element 7 and the motor flange 50 by a bearing 67 and meshes with spur gears (not shown) which are connected to the other crank elements.

A large hollow hole is provided at a center of each of the motor flange 50, the first support element 7, the first external gears 4, the second support element 18 and the second external gears 15.

A hollow protection tube 70 is inserted into the motor flange 50, the first support element 7, the first external gears 4, the second support element 18, and the second external gears 15 and is fixed to the second support element 18 with bolts 71. Pipings and cables can be passed through the hollow space of the protection tube 70.

Next, the function of Embodiment 2 will be described. Since the speed reducing function by the first reduction gear 30 and the second reduction gear 40 is known, the speed reducing function will be described briefly.

When the first internal toothed element 2 and the second internal toothed element 13 are fixed, the rotation of the motor shaft 52 is transmitted to the second crank elements 17 and the first crank elements 6 via the spur gear mechanism 60, and rotation with a reduced speed is taken out from the second support element 18 and the first support element 7 which are fixed to each other.

Here, as with Embodiment 1, in Embodiment 2, as well, since the internal teeth and the external teeth are preloaded, the backlash can be suppressed to on the order of 0.3 arcminute or smaller. In addition, pipings and cables can be passed through the hollow space in the protection tube 70.

### (Embodiment 3)

Hereinafter, Embodiment 3 of the invention will be described based on the drawing. Like reference numerals will be given to like constituent elements to those of Embodiment 1, and the description thereof will be made briefly.

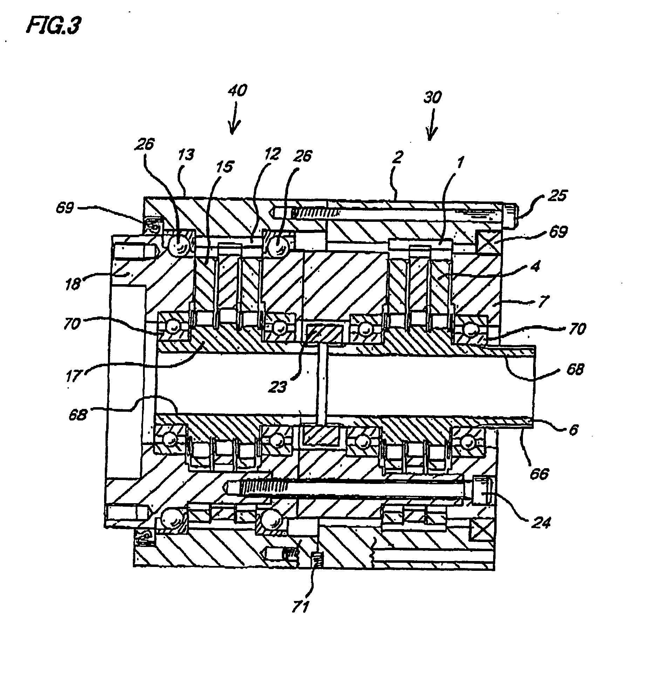

In Fig. 3, a reduction gear system 100 is made up of a center crank-type first reduction gear 30 and a center crank-type second reduction gear 40. The first reduction gear 30 includes a first internal toothed element 2 having a plurality of pins 1 as internal teeth on an inner circumference thereof, three first external gears 4, a first crank element 6 and a first support element 7. The plurality of pins 1 functioning as internal teeth and the first internal toothed element 2 constitute a first internal gear.

The second reduction gear 40 includes a second internal toothed element 13 having a plurality of pins 12 as internal teeth on an inner circumference thereof, three second external gears 15, a second crank element 17 and a second support element 18. The plurality of pins 12 functioning as internal teeth and the second internal toothed element 13 constitute a second internal gear.

The first crank element 6 and the second crank element 17 are spline connected to each other via a coupling 23 to rotate together, the first support element 7 and the second support element 18 are fixed together with bolts 24, and the first internal toothed element 2 and the second internal toothed element 13 are fixed to each other with bolts 25 under a state that the first internal toothed element 2 and the second internal toothed element 13 are rotated in opposite directions relative to each other.

A pair of bearings 26 are disposed between the second internal toothed element 13 and the second support element 18 to straddle the second external gears 15. The rotation of a motor (not shown) is inputted to male splines 66 of the first support element 7. Rotation with a reduced speed is outputted from the first internal toothed element 2 and the second internal toothed element 13 or the first support element 7 and the second support element 18. A large hollow hole 68 is provided at a center of each of the first crank element 6 and the second crank element 17. Pipings and cables can be passed through the hollow holes 68.

The first crank element 6 and the second crank element 17 are supported rotatably on the first support element 7 and the second support element 18 by pairs of bearings 70, respectively. Oil seals 69 are disposed individually between the second internal toothed element 13 and the second support element 18 and between the first internal toothed element 2 and the first support element 7.

In place of using a positioning taper pin, screws 71 may be screwed in towards outer circumferential connecting surfaces of the first internal toothed element 2 and the second internal toothed element 13 from outer circumferences of the first internal toothed element 2 and the second internal toothed element 13.

Next, the function of Embodiment 3 will be described. Since the speed reducing function by the first reduction gear 30 and the second reduction gear 40 is known, the speed reducing function will be described briefly.

When the first internal toothed element 2 and the second internal toothed element 13 are fixed, rotation with a reduced speed is taken out from the second support element 18 and the first support element 7 which are fixed to each other. Here, as with Embodiment 1, in Embodiment 3, as well, since the internal teeth and the external teeth are preloaded, the backlash can be suppressed to on the order of 0,3 arcminute or smaller.

### (Embodiment 4)

Hereinafter, Embodiment 4 of the invention will be described based on the drawing. Like reference numerals will be given to like constituent elements to those of Embodiment 1, and the description thereof will be made briefly.

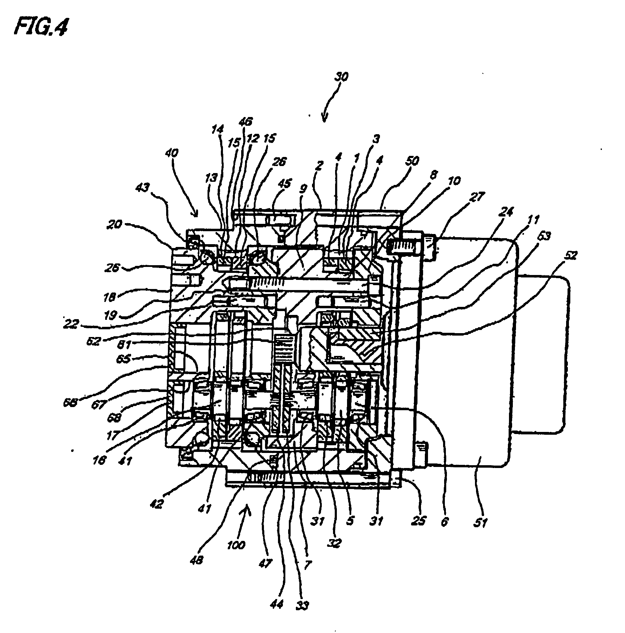

In Fig. 4, a reduction gear system 100 is made up of a first reduction gear 30 and a second reduction gear 40. The first reduction gear 30 includes a first internal toothed element 2 having a plurality of pins 1 on an inner circumference thereof as internal teeth, a pair of first external gears 4 having pluralities of external teeth 3 which mesh with the internal teeth 1, a plurality of crank elements 6 which engage with the first external gears 4 so as to cause the first external gears 4 to perform eccentric motions, and a first support element 7 which supports the first crank elements 6 rotatably. The plurality of pins 1, which function as the internal teeth, and the first internal toothed element 2 are configured into a first internal gear.

The first support element 7 is made up of a support main body 9 on which a pillar portion 8 is formed to penetrate through the first external gears 4 and a disc element 10, and the support main body 9 and the disc element 10 are positioned relative to each other with a pin 11. The number of internal teeth 1 is larger by one or two than the number of external teeth 3.

The second reduction gear 40 includes a second internal toothed element 13 having a plurality of pins 12 on an inner circumference thereof as internal teeth, a pair of second external gears 15 having pluralities of external teeth 14 which mesh with the internal gears 12, a plurality of second crank elements 17 which engage with the second external gears 15 so as to cause the second external gears 15 to perform eccentric motions, and a second support element 18 which supports the second crank elements 17 rotatably. The plurality of pins 12, which function as the internal teeth, and the second internal toothed element 13 are configured into a second internal gear.

The second support element 18 is made up of a support main body 20 on which a pillar portion 19 is formed to penetrate through the second external gears 15 and a disc element 21, and the support main body 20 and the disc element 21 are positioned relative to each other with a pin 22. The number of internal teeth 12 is made larger by one or two than the number of external teeth 14. The speed reducing ratios of the first reduction gear 30 and the second reduction gear 40 are set identical with each other.

There are provided a first spur gear 33 which is spline connected to the first crank elements to rotate together, a second spur gear 44 which is spline connected to the second crank elements to rotate together, and a single input shaft 62 having a spur gear portion 61, and the spur gear portion 61 of the input shaft 62 is caused to mesh with the first spur gear 33 and the second spur gear 44. The number of teeth of the spur gear portion 61 is made smaller than the numbers of teeth of the first spur gear 33 and the second spur gear 44 and constitutes a front-state speed reducing mechanism.

The first support element 7 and the second support element 18 are fixed to each other with a bolt 24, and the first internal toothed element 2 and the second internal toothed element 13 are connected to each other with bolts 25 under a state that the first internal toothed element 2 and the second internal toothed element 13 are rotated in opposite directions relative to each other so as to push on each other (such that the first internal toothed element 2 and the second internal toothed element 13 can each be moved by looseness therein and the internal tooth pins 1 of the first internal toothed element 2 and the external teeth 3 of the first external gears 4 and the internal tooth pins 12 of the second internal toothed element 13 and the external teeth 14 of the second external gears 15 are preloaded). In addition, a positioning taper pin 45 is inserted into a lower hole 46 provided in the first internal toothed element 2 and the second internal toothed element 13 so that the preloaded state cannot be released in an ensured fashion.

The lower hole 46 may be machined beforehand or may be machined under a state that the first internal toothed element 2 and the second internal toothed element 13 are rotated in the opposite directions relative to each other so as to push on each other. In the case of the lower hole being machined beforehand, in the event that a taper hole having a slightly larger diameter than the lower hole 46 is machined further on the lower hole 46 when the first internal toothed element 2 and the second internal toothed element 13 are rotated in the opposite directions relative to each other so as to push on each other, the taper pin 45 can be inserted thereinto in a tightly fitting fashion. In the event that the first internal toothed element 2 and the second internal toothed element 13 are fixed to each other strongly and rigidly with the bolts 25 so that the preloaded state cannot be released, the positioning taper pin 45 does not necessarily have to be used.

In addition, in place of using the positioning taper pin 45, bolts or machine screws may be screwed in towards outer circumferential connecting surfaces of the first internal toothed element 2 and the second internal toothed element 13 from outer circumferences of the first internal toothed element 2 and the second internal toothed element 13.

The first internal toothed element 2 and the second internal toothed element 13 are positioned to each other in a radiating direction (a radial direction) by a socket and smooth fitting at a stepped portion 47. Abutment surfaces of the first internal toothed element 2 and the second internal toothed element 13 are sealed by an O-ring 48. A hole 65 formed in a rotating central portion of a crank shaft of the second support element 18 is closed by a lid 68.

A pair of bearings 26 are disposed between the second internal toothed element 13 and the second support element 18 to straddle the second external gears 15. A motor flange 50 is fixed to the first internal toothed element 2 with the bolts 25. A motor 51 is fixed to the motor flange 50 with bolts 27. Consequently, the motor 51 is fixed to the first internal toothed element 2 via the motor flange 50. The input shaft 62 is connected to a rotational shaft 52 of the motor with a key means 53 so that the rotational shaft 52 of the motor and the input shaft 62 rotate together relative to each other, and the second support element 18 of the second reduction gear constitutes a rotational output.

A pair of bearings 31 are disposed between the first crank elements 6 and the first support element 7. A bearing 32 is disposed between respective crank portions 5 and the respective first external gears 4. A pair of bearings 41 are disposed between the second crank elements 17 and the second support element 18. A bearing 42 is disposed between respective crank portions 16 and the respective second external gears 14. An oil seal 43 is disposed between the inner circumference of the second internal toothed element 13 and the support main body 20.

Next, the function of Embodiment 4 will be described. Since the speed reducing function by the first reduction gear 30 and the second reduction gear 40 is known, the speed reducing function will be described briefly.

When the first internal toothed element 2 and the second internal toothed element 13 are fixed, the rotation of the motor shaft 52 is transmitted from the spur gear portion 61 of the input shaft 62 to the second crank elements 17 and the first crank elements 6 via the spur gears 33 and 44, and rotation with a reduced speed is taken out from the second support element 18 and the first support element 7 which are fixed to each other.

Here, in the event that the internal teeth 1 of the first internal toothed element 2 and the external teeth 3 of the first external gears 4, the internal teeth 12 of the second internal toothed element 13 and the external teeth 14 of the second external gears 15, and the first spur gear 33 and the spur gear portion 61 of the input shaft 62 which are connected to the first crank elements as the front-stage speed reducing mechanism and the first spur gear 44 and the spur gear portion 61 of the input shaft 62 which are connected to the second crank element are not preloaded, backlash at meshing teeth portions between the internal teeth and the external teeth is on the order of 0.5 arcminute at best, and backlash at meshing teeth portions between the spur gear portions is on the order of 0.4 arcminute at best, resulting in a total backlash of the order of 1.0 to 0.9 arcminute.

In this embodiment, however, since the first internal toothed element and the second internal toothed element are connected and fixed together under a state that the first internal toothed element and the second internal toothed element are rotated in the opposite directions relative to each other, so that the internal teeth and the external teeth are preloaded, backlash at meshing teeth portions of the internal teeth and the external teeth can be suppressed to on the order of 0.3 arcminute or smaller, and backlash at meshing teeth portions between the spur gear portions can be suppressed to 0.2 arcminute or smaller, resulting in a total backlash of the order of 0.5 arcminute or smaller.

In addition, in this embodiment, while the first support element and the second support element are fixed to each other and the first internal gear and the second internal gear are fixed to each other under a state that the first internal gear and the second internal gear are rotated in the opposite directions relative to each other, in this embodiment, the first internal gear and the second internal gear may be connected to each other, and the first support element and the second support element may be fixed to each other under a state that the first support element and the second support element are rotated in opposite directions relative to each other.

In addition, in the event that the first support element and the second support element are fixed to each other and the first internal gear and the second internal gear are fixed to each other under a state that the first internal gear and the second internal gear are rotated in the opposite directions relative to each other, in this embodiment, the support main body 9 of the first support element and the disc element 21 of the second support element may be made into an integral unit. In addition, in the event that the first internal gear and the second internal gear are connected to each other, and the first support element and the second support element are fixed to each other under a state that the first support element and the second support element are rotated in opposite directions relative to each other, in this embodiment, the first internal gear 2 and the second internal gear 13 may be made into an integral unit.

### INDUSTRIAL APPLICABILITY

This invention can be applied to a reduction system including a plurality of reduction gears or a plurality of speed reducing mechanisms.

## Claims

1. A reduction gear system (100) comprising
a first reduction gear (30) having a first internal gear,
a first external gear (4) which meshes with the first internal gear,
a first crank element (6) which engages with the first external gear (4) so as to cause the first external gear (4) to perform an eccentric motion and
a first support element (7) for supporting the first crank element (6) rotatably and
a second reduction gear (40) having a second internal gear,
a second external gear (15) which meshes with the second internal gear,
a second crank element (17) which engages with the second external gear (15) so as to cause the second external gear (15) to perform an eccentric motion and
a second support element (18) for supporting the second crank element (17) rotatably, wherein the first support element (7) and the second support element (18) or the first internal gear and the second internal gear are fixed to each other,
**characterized in that** the first internal gear and the second internal gear or the first support element (7) and the second support element (18) are fixed to each other under a state that the first internal gear and the second internal gear or the first support element and the second support element are rotated in opposite directions relative to each other so that the first internal gear and the first external gear as well as the second internal gear and the second external gear are preloaded, wherein in the system is provided only one input shaft (52).

2. A reduction gear system as set forth in Claim 1, wherein a pair of bearings (26) are disposed between the second internal gear (13) and the second support element (18) to straddle the second external gear (15) .

3. A reduction gear system as set forth in Claim 1, comprising a spur gear (60) which is connected to the second crank element (17) and an input gear which meshes with the spur gear (60).

4. A reduction gear as set forth in claim 1, wherein the reduction gear system further comprises a spur gear (60) which is connected to the second crank element (17) and an input gear which meshes with the spur gear wherein the first crank element (6) and the second crank element (17) are connected to each other, wherein the first support element (7) and the second support element (18) are fixed to each other, and wherein the first internal gear and the second internal gear are fixed to each other.

5. A reduction gear as set forth in claim 1, wherein the reduction gear system having a first spur gear which is connected to the first crank element (6), a second spur gear which is connected to the second crank element (17), and an input gear which meshes with the first spur gear and the second spur gear, wherein the first support element (7) and the second support element (18) are fixed to each other, and wherein the first internal gear and the second internal gear are fixed to each other.

6. A reduction gear system as set forth in Claim 5, wherein a pair of bearings (26) are disposed between the second internal gear and the second support element (18) to straddle the second external gear.

7. A reduction gear system as set forth in Claim 5, wherein the first internal gear and the second internal gear are fixed under a state that the first internal gear and the second internal gear are rotated in opposite directions relative to each other.

8. A reduction gear system as set forth in Claim 5, wherein the first support element (7) and the second support element (18) are fixed under a state that the first support element and the second support element are rotated in opposite directions relative to each other.

## Patentansprüche

1. Untersetzungsgetriebevorrichtung (100) umfassend
ein erstes Untersetzungsgetriebe (30) mit einem ersten Innengetriebe,
ein erstes Außengetriebe (4), welches mit dem ersten Innengetriebe kämmt,
ein erstes Kurbelelement (6), welches mit dem ersten Außengetriebe (4) so in Eingriff ist, dass das erste Außengetriebe (4) eine exzentrische Bewegung ausführt, und
ein erstes Abstützelement (7) zum drehbaren Abstützen des ersten Kurbelelementes und ein zweites Untersetzungsgetriebe (40) mit einem zweiten Innengetriebe,
ein zweites Außengetriebe (15), welches mit dem zweiten Innengetriebe kämmt,
ein zweites Kurbelelement (17), welches mit dem zweiten Außengetriebe (15) so in Eingriff ist, dass das zweite Außengetriebe (15) zum Ausführen einer exzentrischen Bewegung veranlasst wird, und
ein zweites Abstützelement (18) zum drehbaren Abstützen des zweiten Kurbelelementes (17),
wobei das erste Abstützelement (7) und das zweite Abstützelement (18) oder das erste Innengetriebe und das zweite Innengetriebe zueinander fixiert sind,
**dadurch gekennzeichnet, dass** das erste Innengetriebe und das zweite Innengetriebe oder das erste Abstützelement (7) und das zweite Abstützelement (18) zueinander derart fixiert sind, dass das erste Innengetriebe und das zweite Innengetriebe oder das erste Abstützelement und das zweite Abstützelement relativ zueinander in entgegengesetzten Richtungen rotieren, so dass das erste Innengetriebe und das erste Außengetriebe wie auch das zweite Innengetriebe und das zweite Außengetriebe vorbelastet sind, wobei sich in der Vorrichtung lediglich eine Antriebswelle (52) befindet.

2. Untersetzungsgetriebevorrichtung nach Anspruch 1, wobei ein Paar von Lagern (26) zwischen dem zweiten Innengetriebe (13) und dem zweiten Abstützelement (18) angeordnet ist, um das zweite Außengetriebe (15) zu spreizen.

3. Untersetzungsgetriebevorrichtung nach Anspruch 1, mit einem Stirnrad (60), welches verbunden ist mit dem zweiten Kurbelelement (17) und einem Antriebsritzel, welches mit dem Stirnrad (60) kämmt.

4. Untersetzungsgetriebevorrichtung nach Anspruch 1, wobei die Untersetzungsgetriebevorrichtung ferner umfasst ein Stirnrad (60), welches verbunden ist mit dem zweiten Kurbelelement (17) und einem Antriebsritzel, welches mit dem Stirnrad kämmt, wobei das erste Kurbelelement (6) und das zweite Kurbelelement (17) miteinander verbunden sind, wobei das erste Abstützelement (7) und das zweite Abstützelement (18) zueinander fixiert sind und wobei das erste Innengetriebe und das zweite Innengetriebe zueinander fixiert sind.

5. Untersetzungsgetriebevorrichtung nach Anspruch 1, wobei die Untersetzungsgetriebevorrichtung ein mit dem ersten Kurbelelement (6) verbundenes erstes Stirnrad, ein mit dem zweiten Kurbelelement (17) verbundenes zweites Stirnrad und ein Antriebsritzel aufweist, welches mit dem ersten Stirnrad und dem zweiten Stirnrad kämmt, wobei das erste Abstützelement (7) und das zweite Abstützelement (18) zueinander fixiert sind, und wobei das erste Innengetriebe und das zweite Innengetriebe zueinander fixiert sind.

6. Untersetzungsgetriebevorrichtung nach Anspruch 5, wobei ein Paar von Lagern (26) zwischen dem zweiten Innengetriebe und dem zweiten Abstützelement (18) angeordnet ist, um das zweite Außengetriebe zu spreizen.

7. Untersetzungsgetriebevorrichtung nach Anspruch 5, wobei das erste Innengetriebe und das zweite Innengetriebe solcherart fixiert sind, dass das erste Innengetriebe und das zweite Innengetriebe in gegenläufigen Richtungen relativ zueinander rotieren.

8. Untersetzungsgetriebevorrichtung nach Anspruch 5, wobei das erste Abstützelement (7) und das zweite Abstützelement (18) solcherart fixiert sind, dass das erste Abstützelement und das zweite Abstützelement in gegenläufigen Richtungen relativ zueinander rotieren.

## Revendications

1. Système d'engrenages de réduction (100) comprenant un premier engrenage de réduction (30) comportant un premier engrenage interne,
un premier engrenage externe (4) qui s'accouple avec le premier engrenage interne,
un premier élément formant manivelle (6) qui se met en prise avec le premier engrenage externe (4) de façon à amener le premier engrenage externe (4) à effectuer un mouvement excentré et
un premier élément de support (7) destiné à porter le premier élément formant manivelle (6) avec une possibilité de rotation, ainsi qu'un second engrenage de réduction (40) comportant un second engrenage interne,
un second engrenage externe (15) qui s'accouple avec le second engrenage interne,
un second élément formant manivelle (17) qui se met en prise avec le second engrenage externe (15) de façon à amener le second engrenage externe (15) à effectuer un mouvement excentré, et
un second élément de support (18) destiné à porter le second élément formant manivelle (17) avec une possibilité de rotation, dans lequel le premier élément de support (7) et le second élément de support (18), ou bien le premier engrenage interne et le second engrenage interne sont fixés l'un à l'autre,
**caractérisé en ce que** le premier engrenage interne et le second engrenage interne, ou le premier élément de support (7) et le second élément de support (18), sont fixés l'un à l'autre dans un état où le premier engrenage interne et le second engrenage interne, ou le premier élément de support et le second élément de support, sont mis en rotation dans des directions opposées l'une par rapport à l'autre, de telle sorte que le premier engrenage interne et le premier engrenage externe tout comme le second engrenage interne et le second engrenage externe soient chargés à l'avance, un seul arbre d'entrée (52) étant prévu dans le système.

2. Système d'engrenages de réduction selon la revendication 1, dans lequel une paire de roulements (26) est disposée entre le second engrenage interne (13) et le second élément de support (18) afin de chevaucher le second engrenage externe (15).

3. Système d'engrenages de réduction selon la revendication 1, comprenant un engrenage cylindrique (60) qui est raccordé au second élément formant manivelle (17) et à un engrenage d'entrée qui s'accouple avec l'engrenage cylindrique (60).

4. Engrenage de réduction selon la revendication 1, dans lequel le système d'engrenages de réduction comprend en outre un engrenage cylindrique (60) qui est raccordé au second élément formant manivelle (17) et un engrenage d'entrée qui s'accouple avec l'engrenage cylindrique, dans lequel le premier élément formant manivelle (6) et le second élément formant manivelle (17) sont raccordés l'un à l'autre, le premier élément de support (7) et le second élément de support (18) étant fixés l'un à l'autre, et le premier engrenage interne et le second engrenage interne étant fixés l'un à l'autre.

5. Engrenage de réduction selon la revendication 1, dans lequel le système d'engrenages de réduction comporte un premier engrenage cylindrique qui est raccordé au premier élément formant manivelle (6), un second engrenage cylindrique qui est raccordé au second élément formant manivelle (17) et un engrenage d'entrée qui s'accouple avec le premier engrenage cylindrique et le second engrenage cylindrique, dans lequel le premier élément de support (7) et le second élément de support (18) sont fixés l'un à l'autre, tout comme dans lequel le premier engrenage interne et le second engrenage interne sont fixés l'un à l'autre.

6. Système d'engrenages de réduction selon la revendication 5, dans lequel une paire de roulements (26) est disposée entre le second engrenage interne et le second élément de support (18) afin de chevaucher le second engrenage externe.

7. Système d'engrenages de réduction selon la revendication 5, dans lequel le premier engrenage interne et le second engrenage interne sont fixés dans un état où le premier engrenage interne et le second engrenage interne sont mis en rotation dans des directions opposées l'une par rapport à l'autre.

8. Système d'engrenages de réduction selon la revendication 5, dans lequel le premier élément de support (7) et le second élément de support (18) sont fixés dans un état où le premier élément de support et le second élément de support sont mis en rotation dans des directions opposées l'une par rapport à l'autre.
